# EUROPÄISCHE PATENTSCHRIFT

(11) **EP 3 504 692 B1**
(45) Veröffentlichungstag und Bekanntmachung des Hinweises auf die Patenterteilung: **03.06.2020**
(21) Anmeldenummer: 17754297.4
(22) Anmeldetag: 31.07.2017
(51) Int. Cl.: G08B 17/107

(54) **VERFAHREN ZUR BRANDDETEKTION NACH DEM STREULICHTPRINZIP MIT GESTAFFELTER ZUSCHALTUNG EINER WEITEREN LED-EINHEIT ZUM EINSTRAHLEN WEITERER LICHTIMPULSE UNTERSCHIEDLICHER WELLENLÄNGE UND STREULICHTWINKEL SOWIE DERARTIGE STREULICHTRAUCHMELDER**
METHOD FOR THE DETECTION OF FIRE BASED ON THE STRAY LIGHT PRINCIPLE WITH STAGGERED CONNECTION OF A FURTHER LED UNIT FOR BEAMING ADDITIONAL LIGHT IMPULSES OF DIFFERENT WAVELENGTHS AND STRAY LIGHT ANGLE AND SUCH STRAY LIGHT SMOKE DETECTORS
PROCEDE DE DETECTION D'INCENDIE SELON LE PRINCIPE DE DIFFUSION DE LA LUMIERE AVEC CONNEXION ECHELONNEE D'UNE AUTRE UNITE A DEL POUR EMETTRE D'AUTRES IMPULSIONS DE LUMIERE DE DIFFERENTES LONGUEURS D'ONDE ET ANGLE DE DIFFUSION DE LUMIERE ET UN TEL DETECTEUR DE FUMEE A ECRAN DIFFUSANT

(30) Priorität: 25.08.2016 EP 16185789
(43) Veröffentlichungstag der Anmeldung: 03.07.2019
(73) Patentinhaber: Siemens Schweiz AG, 8047 Zürich (CH)
(72) Erfinder: DURIC, Aleksandar, 6300 Zug (CH); STÄGER, Mathias, 6313 Menzingen (CH); WALKER, Stefan, 6460 Altdorf (CH)
(74) Vertreter: Maier, Daniel Oliver
(86) Internationale Anmeldenummer: PCT/EP2017/069320
(87) Internationale Veröffentlichungsnummer: WO 2018/036754

(56) Entgegenhaltungen:
- EP-A1- 1 619 640
- DE-A1- 19 902 319
- DE-A1-102011 119 431
- DE-B3-102010 039 230

## Beschreibung

Die Erfindung betrifft ein Verfahren zur Branddetektion nach dem Streulichtprinzip. Dabei werden Lichtimpulse einer ersten Wellenlänge λ₁, wie z.B. von blauem Licht oder nahem UV-Licht (UV-A), und Lichtimpulse einer zweiten Wellenlänge λ₂, wie z.B. von rotem Licht oder nahem infrarotem Licht (NIR), in ein gemeinsames Streulichtvolumen bzw. Messvolumen eingestrahlt. Vorzugsweise werden Leuchtdioden zum Einstrahlen der Lichtimpulse verwendet. Mittels eines Photosensors, wie z.B. einer Photodiode, oder gegebenenfalls mittels eines weiteren Photosensors werden Streustrahlungsintensitäten gemessen, die durch Vorwärts- und Rückwärtsstreuung im Streulichtvolumen erzeugt werden. Durch geeignete Quotientenbildung aus den gemessenen Streustrahlungsintensitäten ist es möglich, Informationen über die Größe und Beschaffenheit der im Streulichtvolumen detektierten Teilchen zu gewinnen.

Derartige Verfahren sind z.B. aus der DE 10 2011 119 431 A1, aus der EP 1 408 469 A2, aus der EP 1 884 904 A1 oder aus EP 2 336 993 A1 bekannt.

Aus der EP 1 430 457 A1 ist ferner ein Verfahren bekannt, bei dem eine zweite Leuchtdiode erst dann eingeschaltet wird, wenn das von der ersten Leuchtdiode stammende Streulichtsignal einen Mindestpegel überschritten hat.

Ausgehend vom eingangs genannten Stand der Technik ist es somit eine Aufgabe der Erfindung, ein verbessertes Rauchdetektionsverfahren anzugeben. Eine weitere Aufgabe ist es, ein stromsparenderes Rauchdetektionsverfahren anzugeben.

Es ist eine weitere Aufgabe der Erfindung, einen verbesserten und/oder besonders stromsparenden Streulichtrauchmelder anzugeben.

Die Aufgabe der Erfindung wird gelöst durch ein Verfahren zur Branddetektion nach dem Streulichtprinzip, mit folgenden Schritten:
a) Einstrahlen von Lichtimpulsen einer ersten Wellenlänge λ₁ in ein Streulichtvolumen und Messen einer durch Vorwärtsstreuung im Streulichtvolumen erzeugten ersten Streustrahlungsintensität I_{1F};
b) Einstrahlen von Lichtimpulsen einer zweiten Wellenlänge λ₂ in das Streulichtvolumen und Messen einer durch Vorwärtsstreuung im Streulichtvolumen erzeugten zweiten Streustrahlungsintensität I_{2F}, wobei die zweite Wellenlänge λ₂ größer ist als die erste Wellenlänge λ₁,
c) Ermitteln eines ersten Quotienten Q1 aus der ersten und zweiten Streustrahlungsintensität I_{IF}, I_{2F} sowie Vergleichen des ersten Quotienten Q1 mit einem ersten und zweiten Vergleichswert F0, S0, wobei der erste Vergleichswert F0 größer ist als der zweite Vergleichswert S0, und
d) wenn der erste Quotient Q1 zwischen dem ersten und dem zweiten Vergleichswert F0, S0 liegt:
   e) Einstrahlen von Lichtimpulsen der zweiten Wellenlänge λ₂ in das Streulichtvolumen und Messen einer durch Rückwärtsstreuung im Streulichtvolumen erzeugten dritten Streustrahlungsintensität I_{2R},
   f) Ermitteln eines zweiten Quotienten Q2 aus der ersten und dritten Streustrahlungsintensität I_{IF}, I_{2R} und Vergleichen des zweiten Quotienten Q2 mit einem dritten Vergleichswert F, und
   g) Ausgeben eines Brandalarms, wenn der zweite Quotient Q2 den dritten Vergleichswert F übersteigt.

Der Kern der Erfindung liegt in der gestaffelten Einstrahlung von Lichtimpulsen in das Streulichtvolumen. Diese erfolgt vorteilhaft erst dann, wenn keine eindeutigen Aussagen über die Größe und Beschaffenheit der detektierten Teilchen gemacht werden kann, sodass weder ein eindeutiger Brandalarm noch eine eindeutige Störgrößenmeldung, wie z.B. bei detektiertem Staub oder Dampf, ausgegeben werden kann.

Es werden daher zeitlich nachfolgend weitere Lichtimpulse der zweiten Wellenlänge λ₂ in das Streulichtvolumen eingestrahlt, um eine durch Rückwärtsstreuung im Streulichtvolumen erzeugte dritte Streustrahlungsintensität I_{2R} als zusätzliche "Information" für die aktuelle Bewertung zu messen. Dabei hat sich gezeigt, dass wenn diese dritte Streustrahlungsintensität I_{2R} in das Verhältnis zur ersten Streulichtintensität I_{1F} gesetzt wird, nun eine vorteilhaft eindeutige Zuordnung des vorherigen unbestimmten Ergebnisses zu einem Brandalarm oder zu einer Störgrößenmeldung möglich ist. Wesentlich ist hier die geeignete Festlegung des dritten Vergleichswerts F.

Diese gestaffelte Auswertung führt somit vorteilhaft zu einer besonders zuverlässigen Brandanalyse. Dadurch dass diese "unbestimmten" Fälle vergleichsweise selten auftreten und daher selten weitere Lichtimpulse eingestrahlt werden müssen, ist dieses erfindungsgemäße Verfahren besonders stromsparend.

Es wird angemerkt, dass anstelle der ersten und zweiten Quotientenbildung auch der jeweilige Kehrwert ermittelt werden kann. In diesem Fall weisen auch die Vergleichswerte F0, S0 und F den Kehrwert auf. Zudem kehren sich die Vergleichsoperatoren wie kleiner oder größer ebenfalls um.

Nach einer Verfahrensvariante erfolgt der Verfahrensschritt e) bereits zusammen mit dem Verfahrensschritt b) und/oder der Verfahrensschritt f) bereits zusammen mit dem Verfahrensschritt c).

Diese Variante ist dann besonders vorteilhaft, wenn sowohl die Vorwärtsstreuung als auch zeitgleich die Rückwärtsstreuung sozusagen "auf Vorrat" gemessen werden kann. Dies ist dann der Fall, wenn die Vorwärtsstreuung und die Rückwärtsstreuung jeweils mit einem separaten Photosensor erfasst werden. Die Ermittlung des zweiten Quotienten Q2 und gegebenenfalls der Vergleich mit dem dritten Vergleichswert F erfolgen somit nur dann, wenn das Ergebnis der Ermittlung des ersten Quotienten Q1 unbestimmt sein sollte, oder alternativ im Anschluss an das Messen der dritten Streustrahlungsintensität I_{2R}. Im ersteren Fall wird im Mittel, da die Ermittlung des Quotienten Q2 nur bedarfsweise ausgeführt wird, weniger Rechenleistung benötigt.

Nach einer besonders vorteilhaften Verfahrensvariante weist das erfindungsgemäße Verfahren folgende zusätzliche Verfahrensschritte auf, wenn der erste Quotient Q1 den ersten Vergleichswert F0 erreicht oder übersteigt:
h) Einstrahlen von Lichtimpulsen der ersten Wellenlänge λ₁ in das Streulichtvolumen und Messen einer durch Rückwärtsstreuung im Streulichtvolumen erzeugten vierten Streustrahlungsintensität I_{1R},
i) Ermitteln eines dritten Quotienten Q3 aus der vierten und ersten Streustrahlungsintensität I_{1R}, I_{1F} und Vergleichen des dritten Quotienten Q3 mit einem vierten Vergleichswert OF, und
j) Ausgeben eines Brandalarms für offenes Feuer, wenn der dritte Quotient Q3 den vierten Vergleichswert übersteigt sowie
k) Ausgeben eines Brandalarms für Schwelbrand im anderen Fall.

In diesem Fall steht bereits fest, dass ein eindeutiger Brand vorliegt, da der erste Quotient Q1 den ersten Vergleichswert F0 erreicht oder überstiegen hat.

Gemäß der Erfindung ist nun vorteilhaft eine Differenzierung des ermittelten Brandes in ein offenes Feuer oder in einen Schwelbrand möglich. Die so gewonnene Information kann alternativ oder zusätzlich auch zu einem allgemeinen unspezifischen Brandalarm ausgegeben werden. Diese zusätzliche Information über die Art des Brandes ist für die Einsatzkräfte bei der Lagebewertung sowie für die Auswahl der Brandbekämpfungsmittel besonders hilfreich. Weiterhin können die aufgetretenen Ereignisse SB, OB, WS melderseitig weiterverarbeitet werden, um z.B. die Reaktionszeit des Melders zu steuern. Der Melder kann z.B. nach dem erstmaligen Auftreten eines detektierten Schwelbrands SB oder offenen Feuers OF im Sinne einer Schleife wieder eine neue Messung starten und auswerten. So kann melderseitig erst dann ein Alarm nach außen abgegeben werden, wenn ein bestimmtes Ereignis wie Schwelbrand SB oder offenes Feuer OF z.B. mehrmals innerhalb einer vorgegebenen Zeit von z.B. 10 Sekunden aufgetreten ist.

Wesentlich ist hier wiederum die geeignete Festlegung des vierten Vergleichswerts OF.

Nach einer Verfahrensvariante erfolgt der Verfahrensschritt h) bereits zusammen mit dem Verfahrensschritt a) und/oder der Verfahrensschritt i) bereits zusammen mit dem vorherigen Verfahrensschritt c).

Auch hier erfolgt das Messen der vierten Streustrahlungsintensität I_{1R} vorteilhaft sozusagen "auf Vorrat". Die Ermittlung des dritten Quotienten Q3 und gegebenenfalls der Vergleich mit dem vierten Vergleichswert OF erfolgen somit nur dann, wenn eine Differenzierung des Brandes in "offenes Feuer" oder in "Schwelbrand" gewünscht oder gefordert ist, oder alternativ im Anschluss an das Messen der vierten Streustrahlungsintensität I_{1R}. Im ersteren Fall wird im Mittel, da die Ermittlung des Quotienten Q3 nur bedarfsweise ausgeführt wird, weniger Rechenleistung benötigt.

Alternativ kann anstelle des dritten Quotienten Q3 ein vierter Quotient Q4 aus der vierten und zweiten Streustrahlungsintensität I_{1R}, I_{2F} ermittelt und dieser mit einem fünften Vergleichswert OF' verglichen werden. Auch in diesem alternativen Fall ist vorteilhaft eine Differenzierung des ermittelten Brandes in ein offenes Feuer oder in einen Schwelbrand möglich. Wesentlich ist hier wiederum die geeignete Festlegung des fünften Vergleichswerts OF'.

Nach einer besonders vorteilhaften Verfahrensvariante erfolgt das Einstrahlen der Lichtimpulse der zweiten Wellenlänge λ₂ und das Messen der zweiten und dritten Streustrahlungsintensität I_{2F}, I_{2R} erst dann, wenn die erste Streustrahlungsintensität I_{1F} einen Mindeststreulichtpegel MIN für die Rauchdetektion überschreitet bzw. überschritten hat.

Alternativ können auch Lichtimpulse der zweiten Wellenlänge λ₂ wiederholt, insbesondere zyklisch, in das Streulichtvolumen eingestrahlt werden. Erreicht oder überschreitet die gemessene zweite Streustrahlungsintensität I_{2F} dann einen Mindeststreulichtpegel MIN für die Rauchdetektion, so werden dann Lichtimpulse der ersten Wellenlänge λ₁ in das Streulichtvolumen eingestrahlt und die erste Streustrahlungsintensität I_{1F} und gegebenenfalls die vierte Streustrahlungsintensität I_{1R} gemessen.

Typischerweise werden die Lichtimpulse der ersten Wellenlänge λ₁ wiederholt, insbesondere zyklisch, in das Streulichtvolumen eingestrahlt, wie z.B. mit einer Wiederholungsfrequenz im Bereich von 0,1 bis 5 Hz. Im zeitlichen Mittel betrachtet erreicht die gemessene erste Streustrahlungsintensität I_{1F} nur selten den Mindeststreulichtpegel MIN. Nur wenn eine ausreichende Konzentration von Rauchpartikeln, Staub oder Dampf in das Streulichtvolumen gelangt, wird der Mindeststreulichtpegel MIN überschritten.

Die Verwendung der "blauen" ersten Wellenlänge λ₁ hat dabei den großen Vorteil, dass dieses sowohl an kleinen Rauchpartikeln als auch an großen Partikeln wie Staub oder Dampf gestreut wird. Dagegen wird "rotes" Licht der zweiten Wellenlänge λ₁ nur wenig an den kleinen Rauchpartikeln gestreut. Dadurch ist vorteilhaft eine vollständige Überwachung sowohl auf Rauchpartikel als auch auf Störgrößen gewährleistet. Zugleich wird durch das gestaffelte Zuschalten der Lichteinstrahlung der zweiten Wellenlänge λ₂ der Stromverbrauch drastisch reduziert.

Einer weiteren Verfahrensvariante zufolge erfolgt das Einstrahlen der Lichtimpulse der ersten und zweiten Wellenlänge λ1, λ2 mit höherer Wiederholungsfrequenz in das Streulichtvolumen, wenn die erste Streustrahlungsintensität I1F einen Mindeststreulichtpegel MIN für die Rauchdetektion überschreitet bzw. überschritten hat. Die Wiederholungsfrequenz kann sich z.B. um den Faktor 2, 4, 5 oder 8 erhöhen. Dadurch ist eine zuverlässigere Detektion eines möglichen Brandes oder einer Störgröße möglich, wie z.B. aufgrund eines dadurch resultierenden größeren Signal-zu-Rauschen-Verhältnisses oder aufgrund einer dadurch besseren Synchronität der Lichtpulse.

Nach einer bevorzugten Verfahrensvariante werden der erste und zweite Quotient Q1, Q2 auf einen gleichen Verhältniswert, vorzugsweise auf einen Wert von 2 für Streuteilchen mit einem mittleren Durchmesser im Bereich von 0,5 bis 1,5 µm, kalibriert. Es wird weiterhin der dritte oder vierte Quotient Q3, Q4 auf die Hälfte dieses gleichen Verhältniswertes, vorzugsweise auf einen Wert von 1, kalibriert.

Die Kalibrierung erfolgt typischerweise mit einem Aerosol, das durch das Streulichtvolumen strömt. Es werden im Rahmen eines Kalibrierungsprozesses dann Streuteilchen mit einem mittleren Durchmesser im Bereich von 0,5 bis 1,5 µm in einer vorgegebenen Teilchenkonzentration in das Streuvolumen eingebracht. Die Streuteilchen können alternativ Stäube sein, wie z.B. Zementstaub. Nach Vorliegen stabiler Bedingungen wird dann für jede Streustrahlungsintensität I_{IF}, I_{2F}, I_{1R}, I_{2R} ein Referenzwert I_{1F',} I_{2F',} I_{1R',} I_{2R'} gemessen.

Soll der erste Quotient Q1 = I_{1F}/ I_{2F} dann den z.B. gewünschten Verhältniswert 2 aufweisen, so ist dieser mit einer Abgleichkonstante zu multiplizieren, die sich aus diesem Verhältniswert mal dem Quotienten aus den aktuell gemessenen Referenzwerten I_{2F'} / I_{1F'} ergibt. Entsprechendes gilt für die zweiten, dritten und vierten Quotienten Q2, Q3, Q4. Alternativ zur Abgleichkonstante kann die Lichtpulsdauer oder der LED-Strom angepasst werden, bis das gewünschte Verhältnis Q1-Q4 erreicht ist.

Ist der erste Quotient Q1 auf den Verhältniswert von 2 bei einer mittleren Teilchengröße von z.B. 0,55 µm im Rauchkanal kalibriert, so liegt ein erster Vergleichswert F0 für das besonders zuverlässige Vorliegen von Feuer bei einem Wert von 2 und ein zweiter Vergleichswert S0 für das besonders zuverlässige Vorliegen von Störgrößen bei einem Wert von 0,9 vor.

Ist der zweite Quotient Q2 gleichfalls auf einen Verhältniswert von 2 bei einer mittleren Teilchengröße von z.B. 0,55 µm im Rauchkanal kalibriert, so liegt ein dritter Vergleichswert F für das besonders zuverlässige Vorliegen von Feuer bei einem Wert von 1 vor.

Ist der dritte Quotient Q3 auf einen Verhältniswert von 1 bei einer mittleren Teilchengröße von z.B. 0,55 µm im Rauchkanal kalibriert, so liegt ein vierter Vergleichswert OF für das besonders zuverlässige Vorliegen von offenem Feuer bei einem Wert von 1,5 vor.

Ist schließlich der vierte Quotient Q4 auf einen Verhältniswert von 1 bei einer mittleren Teilchengröße von z.B. 0,55 µm im Rauchkanal kalibriert, so liegt ein fünfter Vergleichswert OF' für das besonders zuverlässige Vorliegen von offenem Feuer bei einem Wert von 4 vor.

Die Aufgabe der Erfindung wird weiterhin durch einen (ersten) Streulichtrauchmelder mit einer nach dem Streulichtprinzip arbeitenden Detektionseinheit gelöst. Der Streulichtrauchmelder umfasst hierbei eine erste und zweite LED-Einheit zum Einstrahlen von Lichtimpulsen in ein Streulichtvolumen sowie einen hierauf spektral empfindlichen (gemeinsamen) Photosensor. Die erste LED-Einheit ist mit dem Photosensor unter einem Vorwärtsstreuwinkel und die zweite LED-Einheit mit dem Photosensor unter einem Rückwärtsstreuwinkel angeordnet.

Die erste und zweite LED-Einheit sind jeweils zum Aussenden von Lichtimpulsen einer ersten und zweiten Wellenlänge λ₁, λ₂ ausgebildet, wobei die zweite Wellenlänge λ₂ größer ist als die erste Wellenlänge λ₁. Weiterhin weist der Streulichtrauchmelder eine prozessorgestützte Steuereinheit auf, welche mit der ersten und zweiten LED-Einheit sowie mit dem Photosensor verbunden ist. Zudem weist die Steuereinheit Ausgabemittel zumindest für einen Brandalarm sowie einen mit einem Computerprogramm ladbaren elektronischen Speicher auf. Das Computerprogramm weist gemäß der Erfindung durch die prozessorgestützte Steuereinheit ausführbare Instruktionen zur Durchführung des erfindungsgemäßen Verfahrens auf.

Der Photosensor ist insbesondere eine Halbleiter-Photodiode, insbesondere eine Silizium-PIN-Photodiode. Sie ist vorzugsweise eine Silizium-PIN-Photodiode mit verbesserter Blauempfindlichkeit.

Das Computerprogramm ist vorzugsweise in einem nichtflüchtiger elektronischen Speicher des Mikrocontrollers geladen, wie z.B. in einem Flash-Speicher. Der Mikrocontroller weist typischerweise eine Reihe von integrierten Hardware-Funktionseinheiten auf, wie z.B. Analog-/Digital-Umsetzer, Digital-/Analog-Umsetzer, Timmer, digitale Ein-/Ausgabe-Einheiten sowie Busschnittstellen, unter anderem als Ausgabemittel für einen Brandalarm oder einer Störgrößenmeldung.

Bei dieser Ausführungsform des Streulichtrauchmelders sind somit zwei LED-Einheiten sowie ein gemeinsamer Photosensor vorhanden.

Die prozessorgestützte Steuereinheit ist dabei zum individuellen Ansteuern der beiden LED-Einheiten, zum Messen einer durch Vorwärtsstreuung der ersten und zweiten Wellenlänge λ₁, λ₂ erzeugten ersten und zweiten Streustrahlungsintensität I_{IF}, I_{2F} sowie zum Messen einer durch Rückwärtsstreuung der zweiten Wellenlänge λ₂ erzeugten dritten Streustrahlungsintensität I_{2R} jeweils mittels des Photosensors eingerichtet.

Somit ist die Steuereinheit dazu eingerichtet,
- aus der ersten und zweiten Streustrahlungsintensität I_{IF}, I_{2F} den ersten Quotienten Q1 zu ermitteln und diesen mit dem ersten und zweiten Vergleichswert F0, S0 zu vergleichen,
- die zweite LED-Einheit zum Aussenden von Lichtimpulsen anzusteuern und die dritte Streustrahlungsintensität I_{2R} zu messen, falls der erste Quotient Q1 zwischen dem ersten und zweiten Vergleichswert F0, S0 liegt,
- einen zweiten Quotienten Q2 aus der ersten und dritten Streustrahlungsintensität I_{IF}, I_{2R} zu ermitteln und diesen Quotienten Q2 mit einem dritten Vergleichswert F zu vergleichen, und
- den Brandalarm auszugeben, wenn der zweite Quotient Q2 den dritten Vergleichswert F übersteigt.

Im anderen Fall, d.h. wenn der zweite Quotient Q2 den dritten Vergleichswert F nicht übersteigt, kann die Steuereinheit dazu eingerichtet sein, eine Störgrößenmeldung auszugeben, wie z.B. eine Staub- oder Dampfwarnung.

Alternativ oder zusätzlich kann die Steuereinheit dazu eingerichtet sein, wieder eine neue Messung zu starten und dieses Ereignis zu ignorieren. Denn es ist ja gerade die besonders zuverlässige Ermittlung des Vorhandenseins einer Störgröße wie Staub oder Dampf, welche die Ausgabe eines sonst möglichen Fehlalarms vorteilhaft unterbindet.

Die zweite LED-Einheit kann auch zusätzlich zum Aussenden von Lichtimpulsen der ersten Wellenlänge λ₁ ausgebildet sein.

Bei dieser Ausführungsform kann dann die Steuereinheit dazu eingerichtet sein,
- die zweite LED-Einheit zum Aussenden von Lichtimpulsen der ersten Wellenlänge λ₁ anzusteuern und eine durch Rückwärtsstreuung der ersten Wellenlänge λ₁ erzeugte vierte Streustrahlungsintensität I_{1R} zu messen, falls der erste Quotient Q1 den ersten Vergleichswert F0 erreicht oder übersteigt,
- einen dritten Quotienten Q3 aus der vierten und ersten Streustrahlungsintensität I_{1R}, I_{1F} zu ermitteln und diesen Quotienten Q3 mit einem vierten Vergleichswert OF zu vergleichen, und
- einen Brandalarm auszugeben, insbesondere einen Brandalarm für offenes Feuer, wenn der dritte Quotient Q3 den vierten Vergleichswert übersteigt, oder einen Brandalarm für Schwelbrand im anderen Fall auszugeben.

Der Vorwärtsstreuwinkel liegt in einem Bereich von 20° bis 90°, insbesondere von 30° bis 70°. Der Rückwärtsstreuwinkel liegt in einem Bereich von mehr als 90° bis 160°, insbesondere von 110° bis 150°. Bevorzugte Werte für den Vorwärts- und Rückwärtstreulichtwinkel liegen bei 60° und 120°.

Die jeweilige LED-Einheit ist zum Aussenden von Licht der ersten Wellenlänge λ₁ im Bereich von 350 nm bis 550 nm und zum Aussenden von Licht der zweiten Wellenlänge λ₂ im Bereich von 665 nm bis 1000 nm ausgebildet. Sie ist insbesondere zum Aussenden von Licht der ersten Wellenlänge λ₁ von 460 nm ± 40 nm oder 390 nm ± 40 nm und zum Aussenden von Licht der zweiten Wellenlänge λ₂ von 940 nm ± 40 nm oder 860 nm ± 40 nm ausgebildet, d.h. zum Aussenden von monochromatischen Licht.

Die Aufgabe der Erfindung wird weiterhin durch einen (zweiten) Streulichtrauchmelder mit einer nach dem Streulichtprinzip arbeitenden Detektionseinheit gelöst.

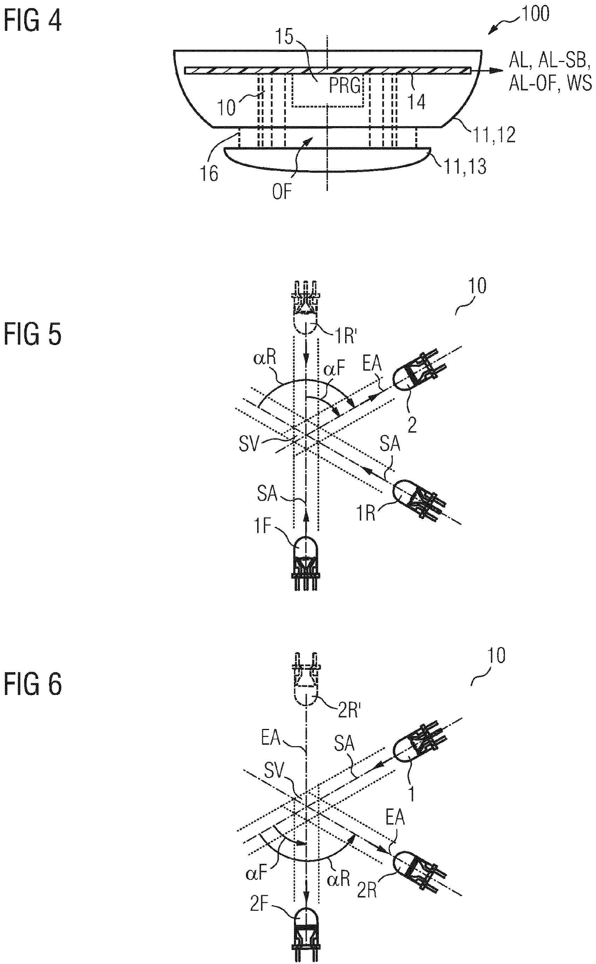

Die Streulichtanordnung des zweiten Streulichtrauchmelders basiert im Vergleich zum ersten Streulichtrauchmelder auf einer alternativen dualen Streulichtanordnung. Denn wie die Figuren FIG 5 und FIG 6 zeigen, existieren zur Durchführung des erfindungsgemäßen Verfahrens prinzipiell zwei duale Streulichtanordnungen. Im ersten Fall gemäß FIG 5 sind zwei LED-Einheiten auf ein gemeinsames Streulichtvolumen gerichtet, jedoch im Bezug zu einem einzigen Photosensor unter einem Vorwärts- und Rückwärtsstreuwinkel. Im zweiten Fall gemäß FIG 6 ist eine einzige LED-Einheit auf das Streulichtvolumen gerichtet, wobei hier nun zwei Photosensoren im Bezug auf die LED-Einheit unter einem Vorwärts- und Rückwärtsstreuwinkel zur LED-Einheit angeordnet sind. Das Ergebnis der Streulichterfassung ist für beide Anordnungen prinzipiell gleich.

Der (zweite) Streulichtrauchmelder weist hierbei eine (einzige) LED-Einheit zum Einstrahlen von Lichtimpulsen in ein Streulichtvolumen sowie einen hierauf spektral empfindlichen ersten und zweiten Photosensor auf. Der erste Photosensor ist mit der LED-Einheit unter einem Vorwärtsstreuwinkel und der zweite Photosensor mit der LED-Einheit unter einem Rückwärtsstreuwinkel angeordnet. Die erste LED-Einheit ist zum Aussenden von Lichtimpulsen einer ersten und zweiten Wellenlänge λ₁, λ₂ ausgebildet, wobei die zweite Wellenlänge λ₂ wieder größer ist als die erste Wellenlänge λ₁. Der Streulichtrauchmelder weist weiterhin eine prozessorgestützte Steuereinheit auf, welche mit der LED-Einheit sowie mit dem ersten und zweiten Photosensor verbunden ist. Die Steuereinheit umfasst zudem Ausgabemittel zumindest für einen Brandalarm sowie einen mit einem Computerprogramm ladbaren elektronischen Speicher. Das Computerprogramm weist gemäß der Erfindung durch die prozessorgestützte Steuereinheit ausführbare Instruktionen zur Durchführung des erfindungsgemäßen Verfahrens auf.

Bei dieser Ausführungsform sind somit nur eine gemeinsame LED-Einheit sowie zwei Photosensoren vorhanden.

In diesem Fall ist die prozessorgestützte Steuereinheit zum Ansteuern der (einzigen) LED-Einheit, zum Messen einer vom ersten Photosensor ausgegebenen ersten und zweiten Streustrahlungsintensität I_{1F} ,I_{2F} der ersten und zweiten Wellenlänge λ₁, λ₂ sowie zum Messen einer vom zweiten Photosensor ausgegebenen dritten Streustrahlungsintensität I_{2R} der zweiten Wellenlänge λ₂ eingerichtet.

Somit ist die Steuereinheit dazu eingerichtet,
- aus der ersten und zweiten Streustrahlungsintensität I_{IF}, I_{2F} einen ersten Quotienten Q1 zu ermitteln und diesen mit einem ersten und zweiten Vergleichswert F0, S0 zu vergleichen,
- einen zweiten Quotienten Q2 aus der ersten und dritten Streustrahlungsintensität I_{IF}, I_{2R} zu ermitteln, falls der erste Quotient Q1 zwischen dem ersten und zweiten Vergleichswert F0, S0 liegt,
- den zweiten Quotienten Q2 mit einem dritten Vergleichswert F zu vergleichen, und
- den Brandalarm auszugeben, wenn der zweite Quotient Q2 den dritten Vergleichswert F übersteigt.

Im anderen Fall kann die Steuereinheit dazu eingerichtet sein, eine Störgrößenmeldung auszugeben, wie z.B. eine Staub- oder Dampfwarnung. Sie kann wiederum zusätzlich oder alternativ dazu eingerichtet sein, dann wieder eine neue Messung zu starten und dieses Ereignis zu ignorieren.

Die Steuereinheit kann darüber hinaus zusätzlich dazu eingerichtet sein,
- eine vom zweiten Photosensor ausgegebene vierte Streustrahlungsintensität I_{1R} der ersten Wellenlänge λ₁ zu messen und einen dritten Quotienten Q3 aus der vierten und ersten Streustrahlungsintensität I_{1R}, I_{1F} zu ermitteln, falls der erste Quotient Q1 den ersten Vergleichswert F0 erreicht oder übersteigt,
- den dritten Quotienten Q3 mit einem vierten Vergleichswert OF zu vergleichen, und
- einen Brandalarm auszugeben, insbesondere einen Brandalarm für offenes Feuer, wenn der dritte Quotient Q3 den vierten Vergleichswert übersteigt, oder einen Brandalarm für Schwelbrand im anderen Fall auszugeben.

Nach einer bevorzugten Ausführungsform ist die jeweilige LED-Einheit eine Zweifarben-Leuchtdiode zum Aussenden des Lichts der ersten und zweiten Wellenlänge λ₁, λ₂. Eine solche Zweifarben-LED ist z.B. aus der EP 2 908 298 A1, aus der DE 20 2014 009 739 U1 oder aus der DE 20 2015 000 820 U1 bekannt.

Bei der zweifarbigen Leuchtdiode handelt es sich um ein einstückiges bzw. einteiliges optoelektronisches Bauelement, mit anderen Worten also um eine Baueinheit. Vorzugsweise ist eine solche zweifarbige Leuchtdiode eine Leuchtdiode mit einem transparenten (Standard-)Gehäuse mit einem Durchmesser von 3 mm oder 5 mm. Derartige 3 mm- oder 5 mm-Leuchtdioden werden bekanntermaßen "off the shelf" als massenhaftes Consumerprodukt verkauft. Sie kann alternativ auch als SMD-Bauteil für die Oberflächenmontage realisiert sein.

Der besondere Vorteil der Zweifarben-Leuchtdiode als LED-Einheit ist, dass im Vergleich zur Detektionseinheit gemäß der EP 1 408 469 A2 anstelle von vier (einteiligen) optoelektronischen Bauelementen nur drei (einteilige) optoelektronische Bauelementen benötigt werden.

Neben der Ersparnis eines Bauelements ist vorteilhaft der verbleibende Fehler nach einer Kalibrierung des optischen Pfads in der Detektionseinheit reduziert. Typischerweise ergeben sich bei der Montage von zwei separaten Leuchtdioden größere relative Abweichungen in Ausrichtung und Platzierung zueinander als bei einer zweifarbigen Leuchtdiode.

Ein weiterer Vorteil liegt darin, dass durch den nun möglichen Entfall der vierten Komponente eine optisch streuende Störgröße entfällt. An der Stelle der sonst vierten Komponenten können weitere lichtabsorbierende oder lichtweglenkende Komponenten als Lichtfalle in der Detektionseinheit eingesetzt werden. Dadurch reduziert sich der messtechnisch störende Grundimpuls erheblich.

Alternativ dazu kann die jeweilige LED-Einheit auch zwei benachbart angeordnete und optisch gleich ausgerichtete einfarbige Leuchtdioden zum Aussenden des Lichts der ersten und der zweiten Wellenlänge λ₁, λ₂ umfassen. In diesem Fall verlaufen die optischen Sendeachsen der beiden einfarbigen LEDs in der Weise, dass sie sich im Streulichtzentrum schneiden.

Alternativ oder zusätzlich kann die jeweilige LED-Einheit zwei einfarbige Leuchtdioden zum Aussenden des Lichts der ersten und zweiten Wellenlänge λ₁, λ₂ umfassen, wobei die zwei Leuchtdioden der jeweiligen LED-Einheit zwar räumlich voneinander getrennt angeordnet, jedoch unter einem gleichen Streulichtwinkel zum jeweiligen Photosensor auf das gemeinsame Streulichtvolumen ausgerichtet sind. Das gestreute Licht der beiden Leuchtdioden trifft somit unter einem gleichen Winkel auf den gemeinsamen Photosensor auf.

Typischerweise ist die Steuereinheit dazu eingerichtet, die jeweilige LED-Einheit abwechselnd zum Aussenden der Lichtimpulse der ersten Wellenlänge λ₁ und der zweiten Wellenlänge λ₂ anzusteuern. Zeitlich synchronisiert erfolgt dann die messtechnische Erfassung des zugehörigen Streulichts aus dem Streulichtvolumen mittels des jeweiligen Photosensors.

Derartige Streulichtrauchmelder weisen typischerweise ein Meldergehäuse mit zumindest einer Raucheintrittsöffnung sowie eine im Meldergehäuse aufgenommene Detektionseinheit für die Rauchdetektion auf. Die Detektionseinheit umfasst vorzugsweise eine gegen Umgebungslicht abgeschirmte, jedoch für zu detektierenden Rauch durchlässige optische Messkammer. Letztere weist üblicherweise eine Vielzahl von Umgebungslicht abschirmenden Lamellen auf und wird daher auch als Labyrinth bezeichnet. Die optische Detektionseinheit umfasst dabei die zuvor beschriebene jeweilige LED-Einheit und den jeweiligen Photosensor in Vorwärts- und Rückwärtsstreulichtanordnung.

Alternativ kann der Streulichtrauchmelder ein sogenannter offener Streulichtrauchmelder sein. In diesem Fall weist der Streulichtrauchmelder kein Labyrinth auf. Vielmehr sind die jeweilige LED-Einheit und der jeweilige Photosensor im Meldergehäuse angeordnet. Sie sind zudem in einer Vorwärts- und Rückwärtsstreulichtanordnung mit einem außerhalb des Meldergehäuses und somit mit einem außerhalb des gesamten Streulichtrauchmelders liegenden Streulichtvolumen angeordnet.

Die Erfindung sowie vorteilhafte Ausführungen der vorliegenden Erfindung werden am Beispiel der nachfolgenden Figuren erläutert. Dabei zeigen:
- FIG 1: ein beispielhaftes Ablaufdiagramm gemäß einer Verfahrensvariante zur Erläuterung des erfindungsgemässen Verfahrens,
- FIG 2: ein beispielhaftes Ablaufdiagramm gemäß einer zweiten Verfahrensvariante,
- FIG 3: ein beispielhaftes Ablaufdiagramm gemäß einer dritten Verfahrensvariante,
- FIG 4: ein Beispiel für einen Streulichtrauchmelder mit einer Steuereinheit mit einem Computerprogramm zur Durchführung des erfindungsgemäßen Verfahrens,
- FIG 5: eine beispielhafte nach dem Streulichtprinzip arbeitende erste Ausführungsform einer Detektionseinheit für einen Rauchmelder mit zwei LED-Einheiten und einem Photoempfänger gemäß der Erfindung,
- FIG 6: eine zweite Ausführungsform einer Detektionseinheit für einen Rauchmelder mit einer LED-Einheit und zwei Photoempfängern gemäß der Erfindung,
- FIG 7: eine alternative Ausführungsform der Detektionseinheit zum Beispiel gemäß der FIG 5, und
- FIG 8: eine alternative Ausführungsform der Detektionseinheit zum Beispiel gemäß der FIG 6.

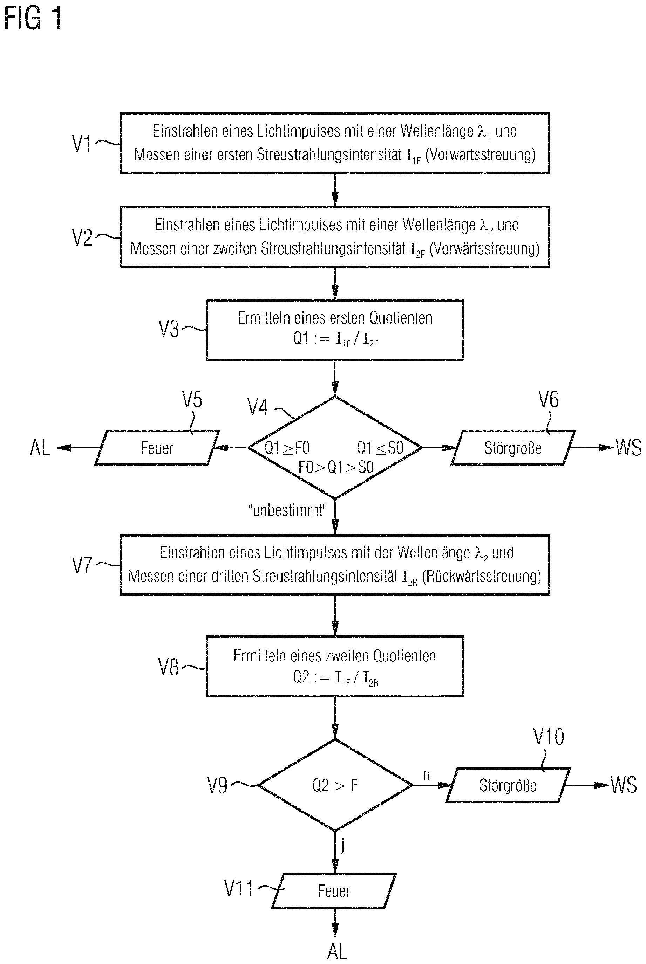

FIG 1 zeigt ein beispielhaftes Ablaufdiagramm gemäß einer Verfahrensvariante zur Erläuterung des erfindungsgemässen Verfahrens.

Die einzelnen Schritte V1-V11 werden vorzugsweise durch geeignete Programmschritte eines Computerprogramms nachgebildet und auf einer prozessorgestützten Steuereinheit eines Streulichtrauchmelders, wie z.B. auf einem Mikrocontroller, ausgeführt.

Im Schritt V1 wird ein Lichtimpuls mit einer ersten Wellenlänge λ₁, wie z.B. ein blauer Lichtimpuls, in ein Streulichtvolumen eingestrahlt und eine durch Vorwärtsstreuung im Streulichtvolumen SV erzeugte erste Streustrahlungsintensität I_{1F} gemessen. Im Schritt V2 wird ein Lichtimpuls mit einer zweiten Wellenlänge λ₂, wie z.B. ein infraroter Lichtimpuls, in das Streulichtvolumen eingestrahlt und eine durch Vorwärtsstreuung im Streulichtvolumen SV erzeugte zweite Streustrahlungsintensität I_{2F} gemessen. Die beiden Schritte V1, V2 können auch umgekehrt erfolgen. Im nachfolgenden Schritt V3 wird ein erster Quotient Q1 aus der ersten und zweiten Streustrahlungsintensität I_{IF}, I_{2F} ermittelt. Nachfolgend wird im Schritt V4 der erste Quotient Q1 mit einem ersten Vergleichswert F0 und mit einem zweiten Vergleichswert S0 verglichen. Der erste Vergleichswert F0 ist dabei betragsmäßig größer als der zweite Vergleichswert S0. Erreicht oder übersteigt der erste Quotient Q1 den ersten Vergleichswert F0, so wird im Schritt V5 ein Brandalarm AL ausgegeben. Ist der erste Quotient Q1 gleich oder kleiner als der zweite Vergleichswert S0, so wird im Schritt V6 eine Störgrößenmeldung WS ausgegeben. Dies ist z.B. dann der Fall, wenn Staub oder Wasserdampf detektiert worden ist. Anderenfalls liegt der erste Quotient Q1 zwischen den beiden Vergleichswerten F0 und S0, und wird als unbestimmt eingestuft. Mit "unbestimmt" ist gemeint, dass keine zuverlässige Aussage darüber getroffen werden kann, ob ein Brand, d.h. Rauchteilchen, oder ob lediglich Staubteilchen oder Wasserdampf vorliegen.

Im unbestimmten Fall wird daher im Schritt V7 ein Lichtimpuls mit der zweiten Wellenlänge λ₂ in das Streulichtvolumen eingestrahlt und eine durch Rückwärtsstreuung im Streulichtvolumen erzeugte dritte Streustrahlungsintensität I_{2R} gemessen. Es wird anschließend im Schritt V8 ein zweiter Quotient Q2 aus der ersten und dritten Streustrahlungsintensität I_{IF}, I_{2R} ermittelt. In Anschluss wird im Schritt V9 dieser Quotient Q2 mit einem dritten Vergleichswert F verglichen. Übersteigt der zweite Quotient Q2 nun den dritten Vergleichswert F, so wird im Schritt V11 ein Brandalarm AL ausgegeben. Im anderen Fall wird im Schritt V10 eine Störgrößenmeldung WS ausgegeben.

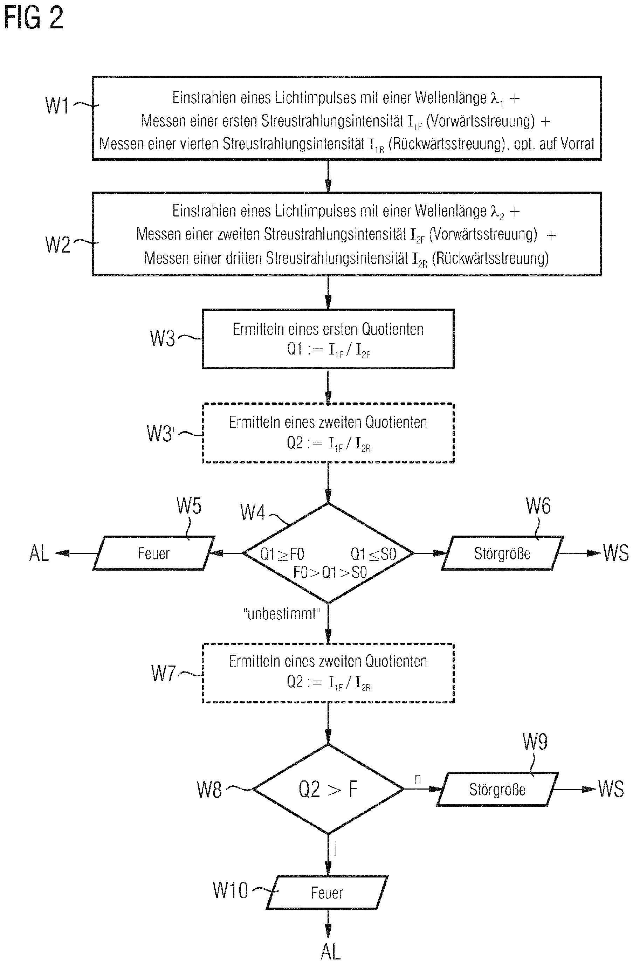

FIG 2 zeigt ein beispielhaftes Ablaufdiagramm gemäß einer zweiten Verfahrensvariante.

Die einzelnen Schritte W1-W10 werden wieder vorzugsweise durch geeignete Programmschritte eines Computerprogramms nachgebildet und auf einer prozessorgestützten Steuereinheit eines Streulichtrauchmelders, wie z.B. auf einem Mikrocontroller, ausgeführt.

Im Vergleich zur vorhergehenden Verfahrensvariante werden in den beiden ersten Schritte W1, W2 Lichtimpulse der ersten und zweiten Wellenlänge λ₁, λ₂ in das Streulichtvolumen eingestrahlt. Es werden neben der ersten und zweiten Streustrahlungsintensität I_{IF}, I_{2F} - sozusagen auf Vorrat - bereits auch die dritte Streustrahlungsintensität I_{2R} gemessen und weiter vorzugsweise auch noch die vierte Streustrahlungsintensität I_{1R} aus der Rückwärtsstreuung gemessen. Ein gegebenenfalls später erforderliches nochmaliges Einstrahlen der Lichtimpulse der ersten und zweiten Wellenlänge λ₁, λ₂ und die Messung der dritten und vierten Streustrahlungsintensität I_{1R}, I_{2R} erübrigt sich dann in vorteilhafter Weise.

Im Anschluss wird im Schritt W3 der erste Quotient Q1 aus der ersten und zweiten Streustrahlungsintensität I_{IF}, I_{2F} und zugleich im Schritt W3', oder alternativ später im Schritt W7 der zweite Quotient Q2 ermittelt. Die nachfolgenden Schritte W4-W10 entsprechen wieder den Schritten V8-V11 gemäß der vorherigen Verfahrensvariante.

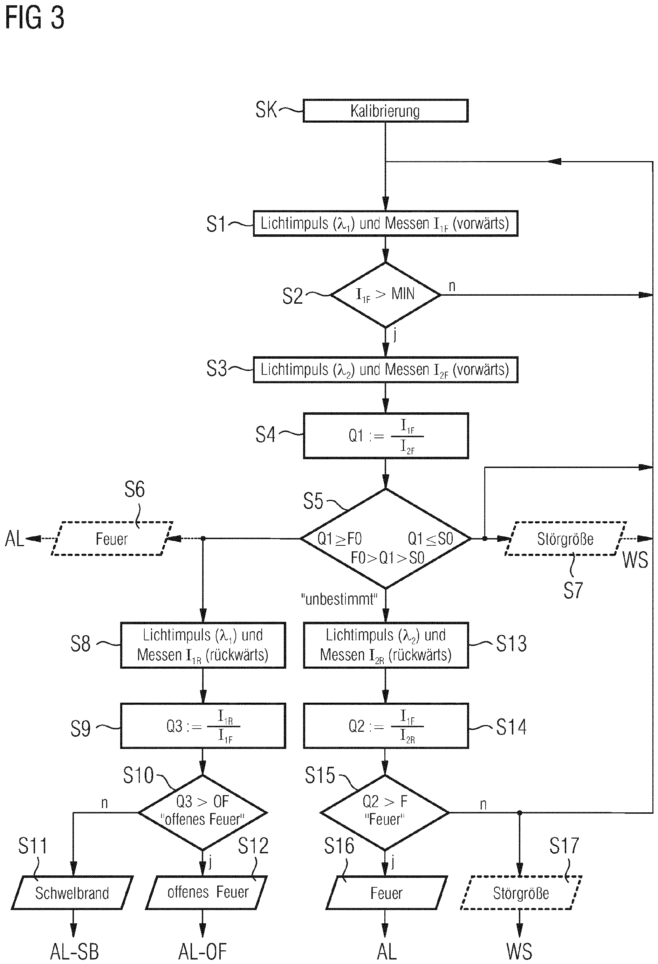

FIG 3 zeigt ein beispielhaftes Ablaufdiagramm gemäß einer dritten Verfahrensvariante.

Die einzelnen Schritte SK, S1-S17 werden wiederum vorzugsweise durch geeignete Programmschritte eines Computerprogramms nachgebildet und auf einer prozessorgestützten Steuereinheit eines Streulichtrauchmelders, wie z.B. auf einem Mikrocontroller, ausgeführt.

Im Schritt SK erfolgt eine (einmalige) Kalibrierung der Streustrahlungsintensitäten I_{IF}, I_{2F}, I_{1R}, I_{2R}, wie z.B. mit Streuteilchen, wie z.B. mit einem Aerosol mit einem vorgegebenen mittleren Durchmesser im Bereich von 0,5 bis 1,5 µm, welches durch das Streulichtvolumen strömt. Vorzugsweise werden die Quotienten Q1 und Q2 auf einen Verhältniswert von 2 und die Quotienten Q3 oder Q4 auf einen Verhältniswert von 1 kalibriert.

Im Schritt S1 werden ein Lichtimpuls der ersten Wellenlänge λ₁, wie z.B. ein blauer Lichtimpuls, in ein Streulichtvolumen eingestrahlt und eine durch Vorwärtsstreuung im Streulichtvolumen erzeugte erste Streustrahlungsintensität I_{1F} gemessen. Im Schritt S2 wird verglichen, ob der Pegel der gemessenen ersten Streustrahlungsintensität I_{1F} einen Mindestpegel MIN für die Rauchdetektion überschreitet. Ist dies nicht der Fall - was größtenteils der Fall ist - dann wird wieder zum Schritt S1 für eine neue Messung zurückverzweigt.

Im Schritt S3 werden anderenfalls ein Lichtimpuls mit einer zweiten Wellenlänge λ₂, wie z.B. ein infraroter Lichtimpuls, in das Streulichtvolumen eingestrahlt und eine durch Vorwärtsstreuung im Streulichtvolumen erzeugte zweite Streustrahlungsintensität I_{2F} gemessen.

Im nachfolgenden Schritt S4 wird ein erster Quotient Q1 aus der ersten und zweiten Streustrahlungsintensität I_{IF}, I_{2F} ermittelt. Nachfolgend wird im Schritt S5 der erste Quotient Q1 mit einem ersten und zweiten Vergleichswert F0, S0 verglichen. Der erste Vergleichswert F0 ist dabei betragsmäßig größer als der zweite Vergleichswert S0.

Erreicht oder übersteigt der erste Quotient Q1 den ersten Vergleichswert F0, so wird im Schritt S6 ein Brandalarm AL ausgegeben.

Alternativ oder zusätzlich werden im Schritt S8 - wie im Beispiel der FIG 3 gezeigt - ein Lichtimpuls der ersten Wellenlänge λ₁ in das Streulichtvolumen eingestrahlt und eine durch Rückwärtsstreuung im Streulichtvolumen erzeugte vierte Streustrahlungsintensität I_{1R} gemessen. Im nachfolgenden Schritt S9 wird dann ein dritter Quotient Q3 aus der vierten und ersten Streustrahlungsintensität I_{1R}, I_{1F} ermittelt. Daraufhin wird im Schritt S10 der dritte Quotient Q3 mit einem vierten Vergleichswert OF für offenes Feuer verglichen. Übersteigt der dritte Quotient Q3 den vierten Vergleichswert OF, so wird im Schritt S12 ein Brandalarm AL-OF für offenes Feuer ausgegeben, und anderenfalls im Schritt S11 ein Brandalarm AL-SB für Schwelbrand ausgegeben.

Ist der erste Quotient Q1 gleich oder kleiner als der zweite Vergleichswert S0, so wird im Schritt S7 eine Störgrößenmeldung WS ausgegeben. Dies ist z.B. dann der Fall, wenn Staub oder Wasserdampf detektiert worden ist. Alternativ oder zusätzlich wird wieder zum Schritt S1 für eine neue Messung verzweigt.

Anderenfalls liegt der erste Quotient Q1 zwischen den beiden Vergleichswerten F0, S0, und wird daher als unbestimmt eingestuft. Es werden dann im Schritt S13 ein Lichtimpuls der zweiten Wellenlänge λ₂ in das Streulichtvolumen eingestrahlt und eine durch Rückwärtsstreuung erzeugte dritte Streustrahlungsintensität I_{2R} gemessen, um im Bezug auf das detektierte unbestimmte Ereignis sozusagen für "Klarheit" zu sorgen.

Es wird anschließend im Schritt S14 ein zweiter Quotient Q2 aus der ersten und dritten Streustrahlungsintensität I_{IF}, I_{2R} ermittelt und dieser anschließend im Schritt S15 mit einem dritten Vergleichswert F für Feuer verglichen. Übersteigt der zweite Quotient Q2 nun den dritten Vergleichswert F, so wird im Schritt S16 ein Brandalarm AL ausgegeben. Im anderen Fall wird im Schritt S17 eine Störgrößenmeldung WS ausgegeben. Alternativ oder zusätzlich wird wieder zum Schritt S1 für eine neue Messung zurückverzweigt und dieses vorliegende Ereignis mehr oder weniger ignoriert.

Generell können anstelle eines einzelnen Lichtimpulses der Wellenlänge λ₁, λ₂ mehrere Lichtimpulse in das Streulichtvolumen eingestrahlt werden und entsprechend auch mehrere Werte für die jeweilige Streustrahlungsintensität I_{IF}, I_{2F}, I_{1R}, I_{2R} gemessen werden, um daraus je einen Mittelwert zu bilden.

Weiterhin erfolgt das gestaffelte Zuschalten des Einstrahlens der Lichtimpulse bis zur letztgültigen Klärung des detektierten Ereignisses, d.h. ob ein allgemeiner Brandalarm AL, ein offenes Feuer AL-OF, ein Schwelbrand AL-SB oder eine Störgröße WS detektiert worden ist, kurzzeitig hintereinander. Die Bestimmung des detektierten Ereignisses erfolgt im Hinblick auf die Wiederholungsfrequenz der Branddetektion sozusagen gleichzeitig und somit simultan. Vorzugsweise wird diese Wiederholungsfrequenz noch erhöht, wenn die erste Streustrahlungsintensität I_{1F} einen Mindeststreulichtpegel MIN für die Rauchdetektion überschreitet.

FIG 4 zeigt ein Beispiel für einen Streulichtrauchmelder 100 mit einer Steuereinheit 15 mit einem Computerprogramm PRG zur Durchführung des erfindungsgemäßen Verfahrens.

Der gezeigte Streulichtrauchmelder 100 weist ein Gehäuse 11 mit einem Grundkörper 12 und mit einer Melderhaube 13 auf. Dazwischenliegend sind Raucheintrittsöffnungen OF für den möglichen Durchtritt von zu detektierenden Rauchteilchen in eine innenliegende optische Messkammer 10 vorhanden. Die optische Messkammer 10 umfasst als optische Detektionseinheit eine Vielzahl von Licht abschirmenden Lamellen. Diese dienen insbesondere zur Abschirmung von direktem Umgebungslicht, jedoch sind sie durchlässig für zu detektierenden Rauch. Die optische Detektionseinheit 10 umfasst dabei eine Streulichtanordnung aus zumindest einer LED-Einheit und zumindest einem Photosensor. Mit dem Bezugszeichen 14 ist ein Schaltungsträger bezeichnet, auf dem unter anderem die prozessorgestützte Steuereinheit 15 in Form eines Mikrocontrollers appliziert ist. Mit dem Bezugszeichen 16 ist schließlich ein Insektenschutz bezeichnet.

FIG 5 zeigt eine beispielhafte nach dem Streulichtprinzip arbeitende erste Ausführungsform einer Detektionseinheit 10 für einen Streulichtrauchmelder 100 mit zwei LED-Einheiten 1F, 1R und einem (einzigen) Photoempfänger 2 gemäß der Erfindung.

Im vorliegenden Beispiel ist die erste LED-Einheit 1F unter einem Vorwärtstreuwinkel aF von 60° zum Photosensor 2 angeordnet. Die zweite LED-Einheit 1R ist unter einem Rückstreuwinkel aR von 120° zum selben Photosensor 2 angeordnet. Es sind zumindest die erste LED-Einheit 1F, vorzugsweise beide LED-Einheiten 1F, 1R, Zweifarben-Leuchtdioden zum Aussenden des Lichts der ersten und zweiten Wellenlänge λ₁, λ₂, d.h. zum Aussenden von Licht im Bereich von 350 nm bis 550 nm und zum Aussenden von Licht im Bereich von 665 nm bis 1000 nm.

Konstruktiv betrachtet sind die beiden Streuwinkel aF, aR durch den Schnittpunkt der jeweiligen Sendeachse SA und der Empfangsachse EA des gemeinsamen Photosensors 2 festgelegt. Der Schnittpunkt liegt dabei im Zentrum des gemeinsamen Streulichtvolumens SV als Schnittvolumen zwischen den ausgesendeten Lichtbündeln der LED-Einheiten 1F, 1R und dem optischen Erfassungsbereich des Photosensors 2. Die beiden Sendeachsen SA sowie die Empfangsachse EA liegen dabei nicht notwendigerweise in einer gemeinsamen Ebene.

1R' ist eine gestrichelt dargestellte alternative Position für die zweite LED-Einheit 1R gleichfalls unter einem Rückstreuwinkel aR von 120°. Allerdings ist diese Anordnung messtechnisch ungünstiger, da eine jeweils gegenüberliegende LED-Einheit 1F, 1R' für die andere wie ein optischer Streukörper wirkt. Dies ist insbesondere dann der Fall, wenn alle Achsen SA, EA in einer gemeinsamen Ebene liegen.

Alle drei Bauelemente 1F, 1R, 2 sind typischerweise mit einem Schaltungsträger 14 elektrisch verbunden, der sich üblicherweise ausserhalb der Detektionseinheit 10 befindet und der an diese angrenzt. Auf dem Schaltungsträger können weitere Bauelemente angeordnet sein wie z.B. ein Mikrocontroller, aktive oder passive Bauelemente.

FIG 6 zeigt eine zweite Ausführungsform einer Detektionseinheit 10 mit einer (einzigen) LED-Einheit 1 und zwei Photoempfängern 2F, 2R gemäß der Erfindung.

Bei der hier im Vergleich zur vorherigen Anordnung gezeigten dualen und prinzipiell funktionsgleichen Anordnung ist ein erster Photosensor 2F unter einem Vorwärtstreuwinkel aF von 60° zur LED-Einheit 1 angeordnet. Der zweite Photosensor 2R ist unter einem Rückstreuwinkel αR von 120° zur selben LED-Einheit 1 angeordnet. Konstruktiv betrachtet sind die beiden Streuwinkel αF, αR durch den Schnittpunkt der jeweiligen Empfangsachsen EA und der Sendeachse SA der gemeinsamen LED-Einheit 1 festgelegt.

2R' ist eine gestrichelt dargestellte alternative Position für den zweiten Photosensor 2R gleichfalls unter einem Rückstreuwinkel αR von 120°.

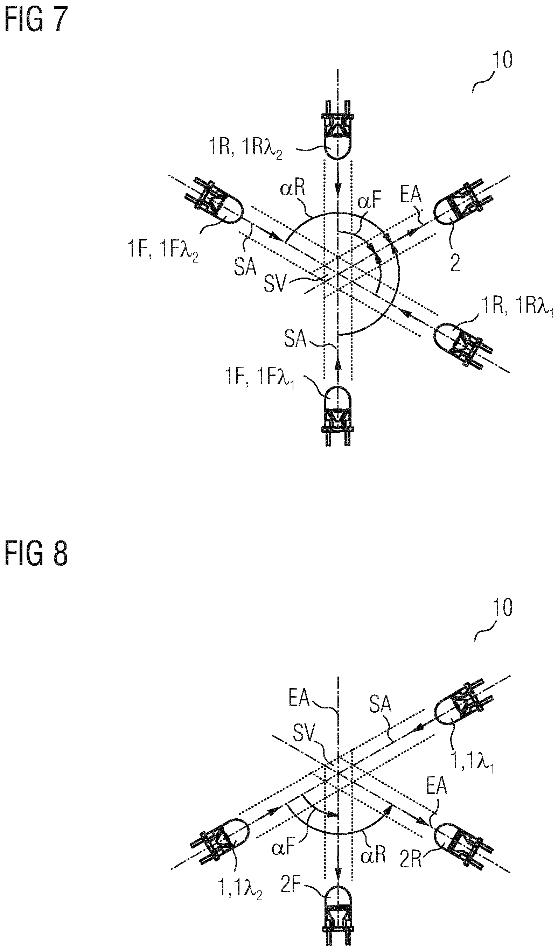

FIG 7 zeigt eine alternative Ausführungsform der Detektionseinheit 10 zum Beispiel gemäß der FIG 5 mit zwei räumlich verteilt angeordneten einfarbigen Leuchtdioden 1Fλ₁, 1Fλ₂; 1Rλ₁, 1Rλ₂ jeweils einer LED-Einheit 1F, 1R.

Bei dieser Anordnung sind die beiden LED-Einheiten 1F, 1R nicht jeweils als optoelektronische Baueinheit in Form einer Zweifarben-LED realisiert, sondern aufgeteilt in jeweils zwei einfarbige Leuchtdioden 1Fλ₁, 1Fλ₂; 1Rλ₁, 1Rλ₂, aber jeweils wieder unter einem gleichen Streuwinkel αF, αR.

FIG 8 zeigt eine alternative Ausführungsform der Detektionseinheit zum Beispiel gemäß der FIG 6 mit zwei räumlich verteilt angeordneten einfarbigen Leuchtdioden Iλ₁, 1λ₂ der LED-Einheit 1.

Bei dieser Anordnung ist die LED-Einheit 1 nicht als optoelektronische Baueinheit in Form einer Zweifarben-LED realisiert, sondern aufgeteilt in zwei einfarbige Leuchtdioden Iλ₁, 1Fλ₂, aber jeweils wieder unter einem gleichen Streuwinkel αF, αR.

### Bezugszeichenliste

- 1, 1F, 1R,: LED-Einheit, Zweifarben-LED, Leuchtdiode
- 1R': äquivalente Positionsanordnung
- 1Fλ₁, 1Fλ₂,: einfarbige Leuchtdiode einer LED-Einheit
- 1Rλ₁, 1Rλ₂; Iλ₁, 1λ₂ 2, 2F, 2R,: Photosensor, Photodiode, Silizium-PIN-Photodiode
- 2R': äquivalente Positionsanordnung
- 10: Detektionseinheit, Messkammer
- 11: Meldergehäuse
- 12: Grundkörper
- 13: Melderhaube
- 14: Leiterplatte, Schaltungsträger
- 15: Steuereinheit, Mikrocontroller, Mikrocomputer
- 16: Insektenschutz, Gitter
- 100: Rauchmelder, Brandmelder, Streulichtrauchmelder

- AL: Alarmmeldung, Brandalarm, Feueralarm
- AL-SB: Brandmeldung für Schwelbrand
- AL-OF: Brandmeldung für offenes Feuer
- EA: Empfangsachse, optische Achse, optische Hauptachse des Photosensors
- OF: Raucheintrittsöffnung
- PRG: Computerprogramm
- SA: Sendeachse, optische Achse, optische Hautachse der LED-Einheit
- SV: Streulichtvolumen, Streuzentrum, Messvolumen
- WS: Störgrößenmeldung, Staub-/Dampf-Meldung
- SK, S1-S17,: Verfahrensschritte
- V1-V11, W1-W10, W3' αF: Streuwinkel, Vorwärtsstreuwinkel
- αR: Streuwinkel, Rückwärtsstreuwinkel

## Patentansprüche

1. Verfahren zur Branddetektion nach dem Streulichtprinzip, mit folgenden Schritten:
a) Einstrahlen von Lichtimpulsen einer ersten Wellenlänge λ₁ in ein Streulichtvolumen (SV) und Messen einer durch Vorwärtsstreuung im Streulichtvolumen (SV) erzeugten ersten Streustrahlungsintensität I_{1F};
b) Einstrahlen von Lichtimpulsen einer zweiten Wellenlänge λ₂ in das Streulichtvolumen (SV) und Messen einer durch Vorwärtsstreuung im Streulichtvolumen (SV) erzeugten zweiten Streustrahlungsintensität I_{2F}, wobei die zweite Wellenlänge λ₂ größer ist als die erste Wellenlänge λ₁,
c) Ermitteln eines ersten Quotienten Q1 aus der ersten und zweiten Streustrahlungsintensität I_{IF}, I_{2F} sowie Vergleichen des ersten Quotienten Q1 mit einem ersten und zweiten Vergleichswert F0, S0, wobei der erste Vergleichswert F0 größer ist als der zweite Vergleichswert S0, und
d) wenn der erste Quotient Q1 zwischen dem ersten und dem zweiten Vergleichswert F0, S0 liegt:
e) Einstrahlen von Lichtimpulsen der zweiten Wellenlänge λ₂ in das Streulichtvolumen (SV) und Messen einer durch Rückwärtsstreuung im Streulichtvolumen (SV) erzeugten dritten Streustrahlungsintensität I_{2R},
f) Ermitteln eines zweiten Quotienten Q2 aus der ersten und dritten Streustrahlungsintensität I_{IF}, I_{2R} und Vergleichen des zweiten Quotienten Q2 mit einem dritten Vergleichswert F, und
g) Ausgeben eines Brandalarms (AL), wenn der zweite Quotient Q2 den dritten Vergleichswert F übersteigt.

2. Verfahren nach Anspruch 1, wobei der Verfahrensschritt e) bereits zusammen mit dem Verfahrensschritt b) und/oder der Verfahrensschritt f) bereits zusammen mit dem Verfahrensschritt c) erfolgt.

3. Verfahren nach Anspruch 1 oder 2, wobei
wenn der erste Quotient Q1 den ersten Vergleichswert F0 erreicht oder übersteigt:
h) Einstrahlen von Lichtimpulsen der ersten Wellenlänge λ₁ in das Streulichtvolumen (SV) und Messen einer durch Rückwärtsstreuung im Streulichtvolumen (SV) erzeugten vierten Streustrahlungsintensität I_{1R},
i) Ermitteln eines dritten Quotienten Q3 aus der vierten und ersten Streustrahlungsintensität I_{1R}, I_{1F} und Vergleichen des dritten Quotienten Q3 mit einem vierten Vergleichswert OF, und
j) Ausgeben eines Brandalarms für offenes Feuer (AL-OF), wenn der dritte Quotient Q3 den vierten Vergleichswert OF übersteigt sowie
k) Ausgeben eines Brandalarms für Schwelbrand (AL-SB) im anderen Fall.

4. Verfahren nach Anspruch 3, wobei der Verfahrensschritt h) bereits zusammen mit dem Verfahrensschritt a) und/oder der Verfahrensschritt i) bereits zusammen mit dem Verfahrensschritt c) des Anspruchs 1 erfolgt.

5. Verfahren nach Anspruch 3 oder 4, wobei anstelle des dritten Quotienten Q3 ein vierter Quotient Q4 aus der vierten und zweiten Streustrahlungsintensität I_{1R}, I_{2F} ermittelt wird und wobei der vierte Quotient Q4 mit einem fünften Vergleichswert OF' verglichen wird.

6. Verfahren nach einem der Ansprüche 1 bis 3, wobei ein Brandalarm (AL) ausgegeben wird, wenn der erste Quotient Q1 den ersten Vergleichswert F0 erreicht oder übersteigt.

7. Verfahren nach einem der vorherigen Ansprüche, wobei das Einstrahlen der Lichtimpulse der zweiten Wellenlänge λ₂ und das Messen der zweiten und dritten Streustrahlungsintensität I_{2F}, I_{2R} erst dann erfolgt, wenn die erste Streustrahlungsintensität I_{1F} einen Mindeststreulichtpegel MIN für die Rauchdetektion überschreitet.

8. Verfahren nach einem der vorherigen Ansprüche, wobei das Einstrahlen der Lichtimpulse der ersten und zweiten Wellenlänge λ₁, λ₂ mit höherer Wiederholungsfrequenz in das Streulichtvolumen (SV) erfolgt, wenn die erste Streustrahlungsintensität I_{1F} einen Mindeststreulichtpegel MIN für die Rauchdetektion überschreitet.

9. Verfahren nach einem der vorherigen Ansprüche, wobei der erste und zweite Quotient Q1, Q2 auf einen gleichen Verhältniswert, vorzugsweise auf einen Wert von 2, und wobei der dritte oder vierte Quotient Q3, Q4 auf die Hälfte dieses gleichen Verhältniswertes, vorzugsweise auf einen Wert von 1, für Streuteilchen mit einem mittleren Durchmesser im Bereich von 0,5 bis 1,5 µm kalibriert werden.

10. Streulichtrauchmelder mit einer nach dem Streulichtprinzip arbeitenden Detektionseinheit (10), welcher aufweist
- eine erste und zweite LED-Einheit (1F, 1R) zum Einstrahlen von Lichtimpulsen in ein Streulichtvolumen (SV) sowie einen hierauf spektral empfindlichen Photosensor (2), wobei die erste LED-Einheit (1F) mit dem Photosensor (2) unter einem Vorwärtsstreuwinkel (αF) und die zweite LED-Einheit (1R) mit dem Photosensor (2) unter einem Rückwärtsstreuwinkel (αR) angeordnet ist, wobei die erste und zweite LED-Einheit (1F, 1R) jeweils zum Aussenden von Lichtimpulsen einer ersten und zweiten Wellenlänge λ₁, λ₂ ausgebildet sind, wobei die zweite Wellenlänge λ₂ größer ist als die erste Wellenlänge λ₁, und
- eine prozessorgestützte Steuereinheit (15), welche mit der ersten und zweiten LED-Einheit (1F, 1R) sowie mit dem Photosensor (2) verbunden ist, und welche Ausgabemittel zumindest für einen Brandalarm (AL, AL-OF, AL-SB) sowie einen mit einem Computerprogramm (PRG) ladbaren elektronischen Speicher aufweist, wobei das Computerprogramm (PRG) durch die prozessorgestützte Steuereinheit (15) ausführbare Instruktionen zur Durchführung des Verfahrens nach einem der vorherigen Ansprüche 1, 3, 5 bis 9 aufweist.

11. Streulichtrauchmelder mit einer nach dem Streulichtprinzip arbeitenden Detektionseinheit (10), welcher aufweist
- eine LED-Einheit (1) zum Einstrahlen von Lichtimpulsen in ein Streulichtvolumen (SV) sowie einen hierauf spektral empfindlichen ersten und zweiten Photosensor (2F, 2R), wobei der erste Photosensor (2F) mit der LED-Einheit (1) unter einem Vorwärtsstreuwinkel (αF) und der zweite Photosensor (2R) mit der LED-Einheit (1) unter einem Rückwärtsstreuwinkel (αR) angeordnet ist, wobei die LED-Einheit (1) zum Aussenden von Lichtimpulsen einer ersten und zweiten Wellenlänge λ₁, λ₂ ausgebildet ist, wobei die zweite Wellenlänge λ₂ größer ist als die erste Wellenlänge λ₁,
- eine prozessorgestützte Steuereinheit (15), welche mit der LED-Einheit (1) sowie mit dem erstem und zweiten Photosensor (2F, 2R) verbunden ist, und welche Ausgabemittel zumindest für einen Brandalarm (AL, AL-OF, AL-SB) sowie einen mit einem Computerprogramm (PRG) ladbaren elektronischen Speicher aufweist, wobei das Computerprogramm (PRG) durch die prozessorgestützte Steuereinheit (15) ausführbare Instruktionen zur Durchführung des Verfahrens nach einem der vorherigen Ansprüche 2, 4 bis 9 aufweist.

12. Streulichtrauchmelder nach Anspruch 10 oder 11, wobei die jeweilige LED-Einheit (1F, 1R; 1) zum Aussenden von Licht der ersten Wellenlänge λ₁ im Bereich von 350 nm bis 550 nm und zum Aussenden von Licht der zweiten Wellenlänge λ₂ im Bereich von 665 nm bis 1000 nm ausgebildet ist, insbesondere zum Aussenden von Licht der ersten Wellenlänge λ₁ von 460 nm ± 40 nm oder 390 nm ± 40 nm und zum Aussenden von Licht der zweiten Wellenlänge λ₂ von 940 nm ± 40 nm oder 860 nm ± 40 nm.

13. Streulichtrauchmelder nach einem der Ansprüche 10 bis 12, wobei die jeweilige LED-Einheit (1F, 1R; 1) eine Zweifarben-Leuchtdiode zum Aussenden des Lichts der ersten und zweiten Wellenlänge λ₁, λ₂ ist.

14. Streulichtrauchmelder nach einem der Ansprüche 10 bis 13,
- wobei die jeweilige LED-Einheit (1F, 1R; 1) zwei benachbart angeordnete und optisch gleich ausgerichtete einfarbige Leuchtdioden zum Aussenden des Lichts der ersten und der zweiten Wellenlänge λ₁, λ₂ umfasst und/oder
- wobei die jeweilige LED-Einheit (1F, 1R; 1) zwei einfarbige Leuchtdioden (1Fλ₁, 1Fλ₂, 1Rλ₁, 1Rλ₂; Iλ₁, 1λ₂) zum Aussenden des Lichts der ersten und der zweiten Wellenlänge (λ₁, _{λ2}) umfasst, wobei die zwei einfarbigen Leuchtdioden (1Fλ₁, 1Fλ₂, 1Rλ₁, 1Rλ₂; Iλ₁, 1λ₂) der jeweiligen LED-Einheit (1F, 1R; 1) räumlich voneinander getrennt angeordnet und unter einem gleichen Streulichtwinkel (αF, αR) zum jeweiligen Photosensor (2; 2R, 2F) auf das gemeinsame Streulichtvolumen (SV) ausgerichtet sind.

15. Streulichtrauchmelder nach einem der Ansprüche 10 bis 14, wobei die Steuereinheit (15) dazu eingerichtet ist, die jeweilige LED-Einheit (1F, 1R, 1) abwechselnd zum Aussenden der Lichtimpulse der ersten Wellenlänge λ₁ und der zweiten Wellenlänge λ₂ anzusteuern.

## Claims

1. A method for fire detection according to the scattered light principle, having the following steps:
a) radiating light pulses of a first wavelength λ₁ into a scattered light volume (SV) and measuring a first scattered radiation intensity I_{1F} generated by forward scattering in the scattered light volume (SV);
b) radiating light pulses of a second wavelength λ₂ into the scattered light volume (SV) and measuring a second scattered radiation intensity I_{2F} generated by forward scattering in the scattered light volume (SV), wherein the second wavelength λ₂ is greater than the first wavelength λ₁,
c) determining a first quotient Q1 from the first and second scattered radiation intensity I_{1F}, I_{2F} and comparing the first quotient Q1 with a first and second comparison value F0, S0, wherein the first comparison value F0 is greater than the second comparison value S0, and
d) if the first quotient Q1 lies between the first and the second comparison value F0, S0 :
e) radiating light pulses of the second wavelength λ₂ into the scattered light volume (SV) and measuring a third scattered radiation intensity I_{2R} generated by backward scattering in the scattered light volume (SV),
f) determining a second quotient Q2 from the first and third scattered radiation intensity I_{1F}, I_{2R} and comparing the second quotient Q2 with a third comparison value F, and
g) outputting a fire alarm (AL) if the second quotient Q2 exceeds the third comparison value F.

2. The method as claimed in claim 1, wherein the method step e) already takes place together with the method step b) and/or the method step f) already takes place together with the method step c).

3. The method as claimed in claim 1 or 2, wherein
if the first quotient Q1 reaches or exceeds the first comparison value F0 :
h) radiating light pulses of the first wavelength λ₁ into the scattered light volume (SV) and measuring a fourth scattered radiation intensity I_{1R} generated by backward scattering in the scattered light volume (SV),
i) determining a third quotient Q3 from the fourth and first scattered radiation intensity I_{1R}, I_{1F} and comparing the third quotient Q3 with a fourth comparison value OF, and
j) outputting a fire alarm for an open fire (AL-OF) if the third quotient Q3 exceeds the fourth comparison value OF, and
k) otherwise, outputting a fire alarm for a smoldering fire (AL-SB) .

4. The method as claimed in claim 3, wherein the method step h) already takes place together with the method step a) and/or the method step i) already takes place together with the method step c) of claim 1.

5. The method as claimed in claim 3 or 4, wherein in place of the third quotient Q3, a fourth quotient Q4 is determined from the fourth and second scattered radiation intensity I_{1R}, I_{2F} and wherein the fourth quotient Q4 is compared with a fifth comparison value OF' .

6. The method as claimed in one of claims 1 to 3, wherein a fire alarm (AL) is output if the first quotient Q1 reaches or exceeds the first comparison value F0.

7. The method as claimed in one of the preceding claims, wherein the radiating-in of the light pulses of the second wavelength λ₂ and the measurement of the second and third scattered radiation intensity I_{2F}, I_{2R} takes place only when the first scattered radiation intensity I_{1F} exceeds a minimum scattered light level MIN for the smoke detection.

8. The method as claimed in one of the preceding claims, wherein the radiating-in of the light pulses of the first and second wavelength λ₁, λ₂ into the scattered light volume (SV) takes place at a higher repetition frequency if the first scattered radiation intensity I_{1F} exceeds a minimum scattered light level MIN for the smoke detection.

9. The method as claimed in one of the preceding claims, wherein the first and second quotient Q1, Q2 are calibrated to an identical ratio value, preferably to a value of 2 and wherein the third and fourth quotient Q3, Q4 are calibrated to half of this identical ratio value, preferably to a value of 1, for scattering particles with a mean diameter in the range of 0.5 to 1.5 µm.

10. A scattered light smoke detector with a detection unit (10) functioning according to the scattered light principle, which comprises
- a first and second LED unit (1F, 1R) for radiating light pulses into a scattered light volume (SV) and a photosensor (2) which is spectrally sensitive thereto, wherein the first LED unit (1F) is arranged with the photosensor (2) at a forward scatter angle (αF) and the second LED unit (1R) is arranged with the photosensor (2) at a backward scatter angle (αR), wherein the first and second LED unit (1F, 1R) are each configured to output light pulses of a first and second wavelength λ₁, λ₂, wherein the second wavelength λ₂ is greater than the first wavelength λ₁, and
- a processor-supported control unit (15) which is connected to the first and second LED unit (1F, 1R) and to the photosensor (2) and which has output means at least for a fire alarm (AL, AL-OF, AL-SB) and an electronic memory store which is loadable with a computer program (PRG), wherein the computer program (PRG) comprises instructions which are executable by the processor-supported control unit (15) for carrying out the method as claimed in one of the preceding claims 1, 3, 5 to 9.

11. A scattered light smoke detector with a detection unit (10) functioning according to the scattered light principle, which comprises
- an LED unit (1) for radiating light pulses into a scattered light volume (SV) and a photosensor (2F, 2R) which is spectrally sensitive thereto, wherein the first photosensor (2F) is arranged in relation to the LED unit (1) at a forward scatter angle (αF) and the second photosensor (2R) is arranged in relation to the LED unit (1) at a backward scatter angle (αR), wherein the LED unit (1) is configured to output light pulses of a first and second wavelength λ₁, λ₂, wherein the second wavelength λ₂ is greater than the first wavelength λ₁,
- a processor-supported control unit (15) which is connected to the LED unit (1) and to the first and second photosensor (2F, 2R) and which has output means at least for a fire alarm (AL, AL-OF, AL-SB) and an electronic memory store which is loadable with a computer program (PRG), wherein the computer program (PRG) comprises instructions executable by the processor-supported control unit (15) for carrying out the method according to one of the preceding claims 2, 4 to 9.

12. The scattered light smoke detector as claimed in claim 10 or 11, wherein the respective LED unit (1F, 1R;1) is configured to output light of the first wavelength λ₁ in the range of 350 nm to 550 nm and to output light of the second wavelength λ₂ in the range of 665 nm to 1000 nm, in particular to output light of the first wavelength λ₁ of 460 nm ± 40 nm or 390 nm ± 40 nm and to output light of the second wavelength λ₂ of 940 nm ± 40 nm or 860 nm ± 40 nm.

13. The scattered light smoke detector as claimed in one of claims 10 to 12, wherein the respective LED unit (1F, 1R; 1) is a two-color light-emitting diode for outputting the light of the first and second wavelength λ₁, λ₂.

14. The scattered light smoke detector as claimed in one of claims 10 to 13,
- wherein the respective LED unit (1F, 1R; 1) comprises two adjacently arranged and optically identically oriented single-color light-emitting diodes for outputting the light of the first and second wavelength λ₁, λ₂ and/or
- wherein the respective LED unit (1F, 1R; 1) comprises two single-color light-emitting diodes (1Fλ₁, 1Fλ₂, IRλ₁, 1Rλ₂; Iλ₁, 1λ₂) for outputting the light of the first and second wavelength (λ₁, λ₂), wherein the two light-emitting diodes (IFλ₁, 1Fλ₂, IRλ₁, 1Rλ₂; Iλ₁, 1λ₂) of the respective LED unit (1F, 1R; 1) are configured spatially separated from one another and are oriented toward the common scattered light volume (SV) at an identical scattered light angle (αF, αR) to the respective photosensor (2; 2R, 2F).

15. The scattered light smoke detector as claimed in one of claims 10 to 14, wherein the control unit (15) is configured to control the respective LED unit (1F, 1R, 1) alternatingly to output the light pulses of the first wavelength λ₁ and the second wavelength λ₂.

## Revendications

1. Procédé de détection d'incendie selon le principe de la lumière diffusée, avec les étapes suivantes :
a) irradiation d'impulsions lumineuses d'une première longueur d'onde λ₁ dans un volume de lumière diffusée (SV) et mesure d'une première intensité de rayonnement diffusé I_{1F} générée par diffusion vers l'avant dans le volume de lumière diffusée (SV) ;
b) irradiation d'impulsions lumineuses d'une deuxième longueur d'onde λ₂ dans le volume de lumière diffusée (SV) et mesure d'une deuxième intensité de rayonnement diffusé I_{2F} générée par diffusion vers l'avant dans le volume de lumière diffusée (SV), dans lequel la deuxième longueur d'onde λ₂ est supérieure à la première longueur d'onde λ₁,
c) détermination d'un premier quotient Q1 entre les première et deuxième intensités de rayonnement diffusé I_{1F}, I_{2F} ainsi que la comparaison du premier quotient Q1 avec des première et deuxième valeurs de comparaison F0, S0, dans lequel la première valeur de comparaison F0 est supérieure à la deuxième valeur de comparaison S0 et
d) lorsque le premier quotient Q1 se trouve entre les première et deuxième valeurs de comparaison F0, S0 :
e) irradiation d'impulsions lumineuses d'une deuxième longueur d'onde λ₂ dans le volume de lumière diffusée (SV) et mesure d'une troisième intensité de rayonnement diffusé I_{2R} générée par diffusion vers l'arrière dans le volume de lumière diffusée (SV),
f) détermination d'un deuxième quotient Q2 entre les première et troisième intensités de rayonnement diffusé I_{1F}, I_{2R} et comparaison du deuxième quotient Q2 avec une troisième valeur de comparaison F et
g) émission d'une alarme incendie (AL) lorsque le deuxième quotient Q2 dépasse la troisième valeur de comparaison F.

2. Procédé selon la revendication 1, dans lequel l'étape e) a lieu déjà conjointement avec l'étape b) et/ou l'étape f) a lieu déjà conjointement avec l'étape c).

3. Procédé selon la revendication 1 ou 2, dans lequel lorsque le premier quotient Q1 atteint ou dépasse la première valeur de comparaison F0 :
h) irradiation d'impulsions lumineuses de la première longueur d'onde λ₁ dans le volume de lumière diffusée (SV) et mesure d'une quatrième intensité de rayonnement diffusé I_{1R} générée par diffusion vers l'arrière dans le volume de lumière diffusée (SV),
i) détermination d'un troisième quotient Q3 entre les quatrième et première intensités de rayonnement diffusé I_{1R}, I_{1F} et comparaison du troisième quotient Q3 avec une quatrième valeur de comparaison OF et
j) émission d'une alarme incendie pour un feu ouvert (AL-OF) lorsque le troisième quotient Q3 dépasse la quatrième valeur de comparaison OF ainsi que
k) émission d'une alarme incendie pour un feu couvant (AL-SB) dans l'autre cas.

4. Procédé selon la revendication 3, dans lequel l'étape h) a lieu déjà conjointement avec l'étape a) et/ou l'étape i) a lieu déjà conjointement avec l'étape c) de la revendication 1.

5. Procédé selon la revendication 3 ou 4, dans lequel, au lieu du troisième quotient Q3, un quatrième quotient Q4, entre la quatrième et la deuxième intensités de rayonnement diffusé I_{1R}, I_{2F}, est déterminé et dans lequel le quatrième quotient Q4 est comparé avec une cinquième valeur de comparaison OF'.

6. Procédé selon l'une des revendications 1 à 3, dans lequel une alarme incendie (AL) est émise lorsque le premier quotient Q1 atteint ou dépasse la première valeur de comparaison F0.

7. Procédé selon l'une des revendications précédentes, dans lequel l'irradiation des impulsions lumineuses de la deuxième longueur d'onde λ₂ et la mesure des deuxième et troisième intensités de rayonnement diffusé I_{2F}, I_{2R} n'a lieu que lorsque la première intensité de rayonnement diffusé I_{1F} dépasse un niveau de lumière diffusé minimal MIN pour la détection de fumée.

8. Procédé selon l'une des revendications précédentes, dans lequel l'irradiation des impulsions lumineuses des première et deuxième longueurs d'onde λ₁, λ₂ a lieu avec une fréquence de répétition plus élevé dans le volume de lumière diffusée (SV) lorsque la première intensité de rayonnement diffusé I_{1F} dépasse un niveau de lumière diffusée minimal MIN pour la détection de fumée.

9. Procédé selon l'une des revendications précédentes, dans lequel les premier et deuxième quotients Q1, Q2 sont calibrés à une même valeur de rapport, de préférence à une valeur de 2 et dans lequel le troisième ou le quatrième quotient Q3, Q4 est calibré à la moitié de cette même valeur de rapport, de préférence à une valeur de 1, pour les particules diffusées avec un diamètre moyen de l'ordre de 0,5 à 1,5 µm.

10. Détecteur de fumée par lumière diffusée avec une unité de détection (10) fonctionnant selon le principe de la lumière diffusée, qui comprend
- une première et une deuxième unités à LED (1F, 1R) pour l'irradiation d'impulsions lumineuses dans un volume de lumière diffusée (SV) ainsi qu'un photocapteur (2) spectralement sensible à celles-ci, dans lequel la première unité à LED (1F) forme, avec le photocapteur (2), un angle de diffusion vers l'avant (αF) et la deuxième unité à LED (1R) forme, avec le photocapteur (2), un angle de diffusion vers l'arrière (αR), dans lequel les première et deuxième unités à LED (1F, 1R) sont conçues chacune pour l'émission d'impulsions lumineuses d'une première et d'une deuxième longueurs d'onde λ₁, λ₂, dans lequel la deuxième longueur d'onde λ₂ est supérieure à la première longueur d'onde λ₁ et
- une unité de commande (15) assistée par un processeur, qui est reliée avec la première et deuxième unités à LED (1F, 1R) ainsi qu'avec le photocapteur (2) et qui comprend des moyens d'émission au moins pour une alarme incendie (AL, AL-OF, AL-SB) ainsi qu'une mémoire électronique pouvant être chargée avec un programme informatique (PRG), dans lequel le programme informatique (PRG) comprend des instructions exécutables par l'unité de commande (15) assistée par un processeur pour l'exécution du procédé selon l'une des revendications précédentes 1, 3, 5 à 9.

11. Détecteur de fumée par lumière diffusée avec une unité de détection (10) fonctionnant selon le principe de la lumière diffusée, qui comprend
- une unité à LED (1) pour l'irradiation d'impulsions lumineuses dans un volume de lumière diffusée (SV) ainsi qu'un premier et un deuxième photocapteurs (2F, 2R) spectralement sensibles à celle-ci, dans lequel le premier photocapteur (2F) forme, avec l'unité à LED (1), un angle de diffusion vers l'avant (αF) et le deuxième photocapteur (2R) forme, avec l'unité à LED (1), un angle de diffusion vers l'arrière (αR), dans lequel l'unité à LED (1) est conçue pour l'émission d'impulsions lumineuses d'une première et d'une deuxième longueurs d'onde λ₁, λ₂, dans lequel la deuxième longueur d'onde λ₂ est supérieure à la première longueur d'onde λ₁,
- une unité de commande (15) assistée par un processeur, qui est reliée avec l'unité à LED (1) ainsi qu'avec les premier et deuxième photocapteurs (2F, 2R) et qui comprend des moyens d'émission au moins pour une alarme incendie (AL, AL-OF, AL-SB) ainsi qu'une mémoire électronique pouvant être chargée avec un programme informatique (PRG), dans lequel le programme informatique (PRG) comprend des instructions exécutables par l'unité de commande (15) assistée par un processeur pour l'exécution du procédé selon l'une des revendications précédentes 2, 4 à 9.

12. Détecteur de fumée par lumière diffusée selon la revendication 10 ou 11, dans lequel l'unité à LED (1F, 1R ; 1) respective est conçue pour l'émission d'une lumière de la première longueur d'onde λ₁ de l'ordre de 350 nm à 550 nm et pour l'émission d'une lumière de la deuxième longueur d'onde λ₂ de l'ordre de 665 nm à 1000 nm, plus particulièrement pour l'émission d'une lumière de la première longueur d'onde λ₁ de 460 nm ± 40 nm ou 390 nm ± 40 nm et pour l'émission d'une lumière de la deuxième longueur d'onde λ₂ de 940 nm ± 40 nm ou 860 nm ± 40 nm.

13. Détecteur de fumée par lumière diffusée selon l'une des revendications 10 à 12, dans lequel l'unité à LED (1F, 1R ; 1) respective est une diode électroluminescente bicolore pour l'émission de la lumière des première et deuxième longueurs d'onde λ₁, λ₂.

14. Détecteur de fumée par lumière diffusée selon l'une des revendications 10 à 13,
- dans lequel l'unité à LED (1F, 1R ; 1) respective comprend deux diodes électroluminescentes disposées de manière adjacente, monochromes et orientée optiquement de manière identique, pour l'émission de la lumière des première et deuxième longueurs d'onde λ₁, λ₂ et/ou
- dans lequel l'unité à LED (1F, 1R ; 1) respective comprend deux diodes électroluminescentes monochromes (1Fλ₁, 1Fλ₂, IRλ₁, 1Rλ₂ ; Iλ₁, 1λ₂) pour l'émission de la lumière des première et deuxième longueurs d'onde λ₁, λ₂, dans lequel les deux diodes électroluminescentes monochromes (1Fλ₁, 1Fλ₂, IRλ₁, 1Rλ₂ ; Iλ₁, 1λ₂) de l'unité à LED (1F, 1R ; 1) respective sont disposées de façon à être séparées physiquement entre elles et sont orientées avec un angle de lumière diffusée identique (αF, αR) par rapport au photocapteur (2 ; 2R, 2F) respectif vers le volume de lumière diffusée (SV) commun.

15. Détecteur de fumée par lumière diffusée selon l'une des revendications 10 à 14, dans lequel l'unité de commande (15) est conçue pour contrôler l'unité à LED (1F, 1R, 1) respective en alternance pour l'émission des impulsions lumineuses de la première longueur d'onde λ₁ et de la deuxième longueur d'onde λ₂.
